(19) Europäisches Patentamt / European Patent Office / Office européen des brevets

(11) **EP 4 464 735 A1**

(12) **EUROPEAN PATENT APPLICATION**

(43) Date of publication:
**20.11.2024 Bulletin 2024/47**

(21) Application number: **24175795.4**

(22) Date of filing: **14.05.2024**

(51) International Patent Classification (IPC):
**C08J 5/18** (2006.01)   **B01D 67/00** (2006.01)
**C08J 5/22** (2006.01)   **H01M 50/417** (2021.01)
**H01M 50/489** (2021.01)   **H01M 50/491** (2021.01)

(52) Cooperative Patent Classification (CPC):
**C08J 5/22; B01D 67/0027; C08J 5/18;
C08J 5/2231; H01M 50/417; H01M 50/489;
H01M 50/491; C08J 2323/12**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.05.2023 KR 20230064248**

(71) Applicants:
• **SK Innovation Co., Ltd.**
  **Seoul 03188 (KR)**

• **SK ie technology Co., Ltd.**
  **Jongno-gu**
  **Seoul**
  **03188 (KR)**

(72) Inventor: **JUNG, In Hwa**
  **34124 Daejeon (KR)**

(74) Representative: **Prüfer & Partner mbB**
  **Patentanwälte · Rechtsanwälte**
  **Sohnckestraße 12**
  **81479 München (DE)**

(54) **POLYPROPYLENE MICROPOROUS MEMBRANE, METHOD FOR MANUFACTURING THE SAME, AND SEPARATOR INCLUDING MICROPOROUS MEMBRANE**

(57) Provided are a polypropylene microporous membrane, a method for manufacturing the same, and a separator including the microporous membrane. According to an embodiment, a polypropylene microporous membrane including a polypropylene having a viscosity average molecular weight of $1\times10^6$ g/mol to $3\times10^6$ g/mol, wherein the microporous membrane has a thickness of 3 um to 30 um, a puncture strength of 0.20 N/um or more, a gas permeability of $1.0\times10^{-5}$ Darcy or more, a porosity of 25% to 60%, an average pore size of 25 nm to 50 nm, and a shrinkage rate in the transverse direction of 20% or less as measured after being allowed to stand at 150°C for 1 hour, is provided.

FIG. 1

10

EP 4 464 735 A1

**Description**

**TECHNICAL FIELD**

The following disclosure relates to a polypropylene microporous membrane, a method for manufacturing the same, and a separator including the microporous membrane. According to an embodiment, the following disclosure relates to a polypropylene microporous membrane having excellent puncture strength and permeability and improved heat resistance even if made into a thin film, to a method for manufacturing the same, to a separator including the microporous membrane, and to an electrochemical device such as a lithium secondary battery.

**BACKGROUND**

A polyolefin-based microporous membrane is used in various fields such as a separation filter, a separator for a secondary battery, a separator for a fuel cell, and a separator for a supercapacitor. Among them, it is widely used as a separator for a secondary battery, since it has excellent electrical insulation, ion permeability, and other satisfactory properties.

Recently, since a secondary battery has a higher capacity and a larger size in order to be applied to an electric vehicle, an energy storage system (ESS), and similar large devices or systems, it is becoming a more important element to secure battery safety. For example, when a battery is exposed to or operated in an environment at a high temperature, a separator may be shrunk to cause internal short circuit and there is a risk of fire due to the internal short circuit. Therefore, development of a polyolefin-based microporous membrane having excellent heat resistance which may withstand a temperature rise of a battery is needed. High mechanical strength is required with heat resistance for improving safety in a battery manufacturing process and during use of the battery, and also is required to have high permeability for improving a capacity and a power.

Since a polyethylene having a high molecular weight, which is used as a main material for a separator for a secondary battery, has a low melting temperature of about 140°C, it has a limitation in heat resistance. As a method for overcoming the problem, a polypropylene having a high melting temperature is used as a material for a separator for a secondary battery.

However, a conventional polypropylene microporous membrane is manufactured by a dry method, and the dry polypropylene microporous membrane is stretched at a low stretch ratio in the machine direction/transverse direction or mainly stretched in a single direction due to the nature of the dry process, and has a lower puncture strength, so that it may be complemented only by increasing the thickness. In addition, pores of the microporous membrane obtained by the dry process are huge in size and straight and have a low pore size uniformity. Since the characteristics as such have a negative effect on the performance of a battery, a dry polypropylene microporous membrane is inappropriate for being used in a secondary battery field.

In order to solve the problem, Korean Patent Laid-Open Publication No. 10-2011-0101202 discloses a polypropylene microporous membrane which is manufactured by a wet process and has excellent heat resistance and strength. However, since the microporous membrane has a significantly low puncture strength of less than 0.05 N/um and its heat shrinkage stability is not greatly improved compared to before, battery safety is inferior in a high-temperature environment as in hot-box evaluation, and thus, the microporous membrane is not appropriate for being applied to a higher-capacity larger battery.

Therefore, in terms of battery performance and safety, development of a polypropylene microporous membrane with high puncture strength and permeability, is significantly requested to improve heat resistance at a high temperature. In particular, excellent battery safety in a hot-box evaluation at 140°C as safety evaluation indicator at a high temperature is demanded.

**SUMMARY**

An embodiment of the present disclosure is directed to providing a polypropylene microporous membrane which has excellent puncture strength, gas permeability and has significantly improved heat resistance at a high temperature, a method for manufacturing the same, a separator including the microporous membrane, and an electronic device comprising the separator. The improved heat resistance is useful for situations at a high temperature, such as when evaluated by a melt fracture temperature test and/or by a hot-box evaluation test. The polypropylene microporous membrane may further exhibit excellent heat shrinkage rate and puncture strength, and may adopt improved ranges of porosity and pore size. The advantageous properties can be embodied even at a low microporous membrane thickness.

In particular, an embodiment of the present disclosure is directed to providing a polypropylene microporous membrane which may also achieve excellent battery safety in a hot-box evaluation at 140°C after assembling a battery.

The polypropylene microporous membrane of the present disclosure may be widely applied to a green technology field such as electric vehicles, battery charging stations, and other solar power generations and wind power generations using batteries. In addition, the polypropylene microporous membrane of the present disclosure may be used in eco-friendly electric vehicles, hybrid vehicles, and other systems which suppress air pollution and greenhouse gas emissions to prevent climate change.

In one general aspect, a polypropylene microporous membrane includes a polypropylene having a viscosity average molecular weight of $1\times10^6$ g/mol to $3\times10^6$ g/mol, wherein the microporous membrane has a thickness of 3 um to 30 $\mu$m, a puncture strength of 0.20 N/um or more, a gas permeability of $1.0\times10^{-5}$ Darcy or more, a porosity of 25% to 60%, an average pore size of 25 nm to 50 nm, and a shrinkage rate in the transverse direction of 20% or less as measured after being allowed to stand at 150°C for 1 hour. Porosity refers to the fraction of the membranes' volume that consists of void spaces or pores. The polypropylene resin may be a homopolymer polypropylene resin. In an embodiment the homopolymer polypropylene resin has a high crystallinity of greater than 40 %, or greater than 50%, or greater than 60% or greater than 70%. In an embodiment, the high crystalline homopolymer resin may have a melting point of from 160 to 170°C.

In an embodiment, the polypropylene microporous membrane may have a melt fracture temperature of 165°C or higher.

In an embodiment, the polypropylene microporous membrane may have a shrinkage rate in the transverse direction of 15% or less.

In an embodiment, the polypropylene microporous membrane may be manufactured by a wet method including a sequential biaxial stretching process.

In another general aspect, a method for manufacturing a polypropylene microporous membrane includes: (a) melting and kneading a mixture including a polypropylene resin having a viscosity average molecular weight of $1\times10^6$ g/mol to $3\times10^6$ g/mol and a diluent through an extruder to prepare a melt; (b) extruding the melt to mold it into a sheet form; (c) sequentially biaxially stretching the sheet in the machine direction and the transverse direction to mold it into a film; (d) extracting the diluent from the stretched film and drying the film; and (e) performing a heat treatment by heat stretching the dried film at a temperature at which 2% to 5% of crystals of the polypropylene resin melt, and heat-setting and heat-relaxing the heat-stretched film at a temperature at which 25% to 60% of the crystals of the polypropylene resin melt.

In an embodiment, the heat stretching in (e) may be performed at a temperature of 125°C to 135°C.

In an embodiment, the heat-setting and the heat-relaxing in (e) may be performed at a temperature of 155°C to 165°C.

In still another general aspect, a separator includes the polypropylene microporous membrane described above.

In an exemplary embodiment, an electrochemical device includes the separator.

In an exemplary embodiment, the electrochemical device is a secondary battery comprising said separator between a positive electrode and a negative electrode.

In an exemplary embodiment, a microporous membrane for a separator of a secondary battery, the microporous membrane being made in the form of a thin film having a thickness of 3 um to 30 um from a polypropylene resin having a viscosity average molecular weight of $1\times10^6$ g/mol to $3\times10^6$ g/mol, the film having a porosity of 25% to 60%, and an average pore size of 25 nm to 50 nm, wherein the microporous membrane exhibits a puncture strength of 0.20 N/um or more, a gas permeability of $1.0\times10^{-5}$ Darcy or more, a porosity of 25% to 60% and a shrinkage rate in the transverse direction of 20% or less as measured after being allowed to stand at 150°C for 1 hour.

In an exemplary embodiment, the microporous membrane has a melt fracture temperature of 165°C or higher.

Other features and aspects will be apparent from the following detailed description, the drawings, and the claims.

## BRIEF DESCRIPTION OF THE DRAWINGS

FIG. 1 is a drawing illustrating a frame for measuring a melt fracture temperature of a microporous membrane manufactured in an exemplary embodiment.

FIG. 2 is a drawing illustrating a form in which a microporous membrane is fixed to a frame with a tape for measuring the melt fracture temperature of the microporous membrane manufactured in an exemplary embodiment.

## DETAILED DESCRIPTION OF EMBODIMENTS

The embodiments described in the present specification may be modified in many different forms, and the technology according to an aspect is not limited to the embodiments set forth herein. In addition, the embodiments of an aspect are provided so that the present disclosure will be described in more detail to a person with ordinary skill in the art.

In addition, the singular form used in the specification and claims appended thereto may be intended to include a plural form also, unless otherwise indicated in the context.

In addition, the numerical range used in the present specification includes all values within the range including the lower limit and the upper limit, increments logically derived in a form and span of a defined range, all double limited values, and all possible combinations of the upper limit and the lower limit in the numerical range defined in different forms. Unless otherwise defined in the present specification, values which may be outside a numerical range due to experimental error or rounding off of a value are also included in the defined numerical range.

Furthermore, throughout the specification, unless explicitly described to the contrary, "comprising" any constituent elements will be understood to imply further inclusion of other constituent elements rather than exclusion of other constituent elements.

The present disclosure provides a polypropylene microporous membrane including: a polypropylene having a viscosity average molecular weight of $1 \times 10^6$ g/mol to $3 \times 10^6$ g/mol, wherein the microporous membrane has a thickness of 3 um to 30 $\mu$m, a puncture strength of 0.20 N/um or more, a gas permeability of $1.0 \times 10^{-5}$ Darcy or more, a porosity of 25% to 60%, an average pore size of 25 nm to 50 nm, and a shrinkage rate in the transverse direction of 20% or less as measured after being allowed to stand at 150°C for 1 hour.

Recently, as a secondary battery has higher capacity and gets larger, better battery performance and safety are required to be met, and for this, a separator for a secondary battery is required to have higher levels of both heat resistance and permeability. For this, a polypropylene having a high melting temperature is used as a material of a separator for a secondary battery, but the polypropylene microporous membrane manufactured by a dry process is not appropriate for being used in a secondary battery field due to low puncture strength and an excessively large and non-uniform pore size. In addition, since a polypropylene microporous membrane manufactured by a wet process also has low puncture strength and its heat shrinkage stability is not greatly improved as compared to before, battery safety is inferior in a high-temperature environment such as hot-box evaluation, and thus, the polypropylene microporous membrane is not appropriate for being used in a higher-capacity larger battery.

As a result of repeated study, the present inventors confirmed that a polypropylene microporous membrane which implements a puncture strength of 0.20 N/um or more, a gas permeability of $1.0 \times 10^{-5}$ Darcy or more, a porosity of 25% to 60%, an average pore size of 25 nm to 50 nm, and a shrinkage rate in the transverse direction of 20% or less as measured after being allowed to stand at 150°C for 1 hour at the same time to have excellent puncture strength and permeability and significantly improved heat resistance at a high temperature may be manufactured. The puncture strength may be measured by attaching a pin tip (such as one having a diameter of 1.0 mm and a radius of curvature of 0.5 mm) and pressing the sample of the microporous membrane at a suitable speed (of e.g. 120 mm/min) against the pin tip, and then calculating the puncture strength by dividing the load (N) when the microporous membrane was broken by the thickness ($\mu$m) of the microporous membrane sample.

The secondary battery according to an embodiment includes the polypropylene microporous membrane satisfying all of the physical properties as described above, thereby securing both excellent battery performance and safety at a high temperature. In particular, the present disclosure may provide a battery which may have excellent thermal safety at a high temperature so that battery fuming or ignition does not occur in a hot-box evaluation at a high temperature of 140°C. The manufacture of a battery for the evaluation and the evaluation method are as follows. A positive electrode using NCM 622 (Ni:Co:Mn = 6:2:2) as an active material and a negative electrode using graphite carbon as an active material are wound with the microporous membrane of the present disclosure and added to an aluminum pouch to manufacture a battery. Subsequently, an electrolyte solution of 1 M lithium hexafluorophosphate (LiPF$_6$) dissolved in a solution including ethylene carbonate, ethyl methyl carbonate, and diethyl carbonate at a volume ratio of 3:5:2 is injected into the battery and the battery is sealed to manufacture a battery having a capacity of 2 Ah. Subsequently, the battery is subjected to aging and degassing operations, fully charged to 4.2 V, and put into an oven, which was heated at 5°C/min to reach 140°C and then allowed to stand for 30 minutes, thereby confirming whether fuming or ignition occurred in the battery. That is, since the polypropylene microporous membrane of the present disclosure satisfies the physical properties as described above, it is appropriate for being applied to a high output/high capacity battery.

As an embodiment, the polypropylene microporous membrane satisfying all of the physical properties as described above may be manufactured by using a polypropylene resin having a specific range of viscosity average molecular weight or performing a heat treatment at a specific temperature after extracting a diluent.

As an embodiment, the polypropylene resin included in the polypropylene microporous membrane may have a viscosity average molecular weight of $1 \times 10^6$ g/mol to $3 \times 10^6$ g/mol, specifically $1.2 \times 10^6$ g/mol to $2.5 \times 10^6$ g/mol, and more specifically $1.3 \times 10^6$ g/mol to $2.2 \times 10^6$ g/mol. The viscosity average molecular weight is derived from the intrinsic viscosity of a polypropylene resin solution. It may be measured based on ISO 16152:2022.

As an embodiment, the heat treating at a specific temperature after extracting a diluent may be heat stretching the film obtained after extracting the diluent at a first temperature, and heat-setting and heat-relaxing the heat-stretched film at a second temperature higher than the first temperature.

Accordingly, the polypropylene microporous membrane may have excellent puncture strength and permeability required for a separator. And also have significantly improved heat resistance at a high temperature.

Hereinafter, the polypropylene microporous membrane will be described in more detail.

In an embodiment, the polypropylene microporous membrane may have a thickness of 3 um to 30 um, specifically 5 um to 20 $\mu$m, and more specifically 5 um to 15 um. The thickness of the microporous membrane may be measured using a contact type thickness meter (which may have a thickness precision of, for example, 0.1 pm). It was found that the microporous membrane of the present disclosure may implement excellent puncture strength, gas permeability, and heat shrinkage rate simultaneously even in the thickness range described above, and in particular, may have excellent battery safety in hot-box evaluation according to the evaluation method of the following examples. In addition, it may have resistance to external stress occurring during manufacture of a battery, to a temperature rise occurring during charge and discharge of a battery, to a dendrite, and to similar impacts, and have low internal resistance of a battery to improve charge and discharge performance of a battery.

In an embodiment, the polypropylene microporous membrane may have a puncture strength of 0.20 N/um or more even in the thickness range described above, and specifically, the puncture strength may be 0.25 N/um or more or 0.30 N/um or more and its upper limit is not particularly limited, but for example, may be 1.0 N/um or less. In a specific embodiment, the puncture strength may be 0.20 N/um to 1.0 N/pm, 0.25 N/um to 1.0 N/$\mu$m, or 0.30 N/um to 1.0 N/um, but is not limited thereto. Since the puncture strength in the range described above is satisfied, resistance to external stress occurring during manufacture of a battery, to a dendrite occurring during charge and discharge of a battery, and to other impacts is excellent, and thus, battery safety may be secured. In addition, a separator for a secondary battery may be thinned, and is appropriate for being applied to a high capacity/high output battery.

In an embodiment, the polypropylene microporous membrane may have a gas permeability of $1.0 \times 10^{-5}$ Darcy or more, and specifically, the gas permeability may be $1.3 \times 10^{-5}$ Darcy or more, $1.5 \times 10^{-5}$ Darcy or more, $3.0 \times 10^{-5}$ Darcy or less, or $5.0 \times 10^{-5}$ Darcy or less. In a specific embodiment, the gas permeability may be $1.0 \times 10^{-5}$ Darcy to $5.0 \times 10^{-5}$ Darcy or $1.3 \times 10^{-5}$ Darcy to $3.0 \times 10^{-5}$ Darcy, but is not limited thereto. Since the gas permeability range described above is satisfied, ion conductivity may be excellent, and battery charge and discharge characteristics may be improved due to low battery internal resistance.

In an embodiment, the polypropylene microporous membrane may have a porosity of 25% to 60%, specifically 30% to 50%, more specifically 35% to 39% in terms of mechanical strength and ion conductivity, but is not limited thereto. The porosity may be measured by taking a sample of the microporous membrane of a defined volume (using a suitable width, length, and thickness), measuring its mass, and calculating the porosity from a ratio between a mass of a resin having the same volume and the measured mass of the microporous membrane:

$$\texttt{Porosity (\%) = 100} \times \{1-M/(A \times B \times T \times \rho)\}$$

wherein M is a mass (g) of a microporous membrane, and $\rho$ is a density (g/cm$^3$) of a polypropylene resin forming a microporous membrane.

In an embodiment, the polypropylene microporous membrane may have an average pore size of 25 nm to 50 nm, specifically 25 nm to 40 nm, and more specifically 25 nm to 35 nm. Herein, the average pore size may be measured using a half dry method. Specifically, the average pore size may be measured using a porometer in accordance with ASTM F316-03.

In an embodiment, the polypropylene microporous membrane may have a shrinkage rate in the transverse direction of 20% or less, 15% or less, or 13% or less as measured after being allowed to stand at 150°C for 1 hour, and the lower limit is not particularly limited, but for example, may be 0.1%, 0.5%, or 1%. In a specific embodiment, the shrinkage rate may be 0.1% to 20%, 0.5% to 15%, or 1% to 13%, but is not limited thereto. The shrinkage rate in the transverse direction may be measured by allowing to hold a sample of the microporous membrane of a suitable size (for example 15 cm $\times$ 15 cm) at a suitable test temperature for an appropriate time, e.g. at 150°C for 1 hour, and then measuring the change in length to calculate the shrinkage rate in the transverse direction.

In an embodiment, the polypropylene microporous membrane may have a melt fracture temperature of 165°C or higher or 170°C or higher, and the upper limit is not particularly limited, but, for example, may be 250°C. In a specific embodiment, the melt fracture temperature may be 165°C to 250°C or 170°C to 250°C, but is not limited thereto. The melt fracture temperature may be measured by fixing a microporous membrane sample of appropriate size to a frame, and allowing it to stand at a set temperature for a suitable time, such as 10 minutes, and observing whether the microporous membrane was broken. A highest temperature at which the microporous membrane was not broken after 10 minutes can then be defined as a melt fracture temperature.

In an embodiment, the polypropylene microporous membrane may be manufactured by a wet method including a sequential biaxial stretching process, and thus, a polypropylene microporous membrane satisfying the physical properties as described above simultaneously may be provided.

Specifically, the polypropylene microporous membrane is manufactured by extruding and sequential biaxial stretching a mixture of a diluent dissolved in a polypropylene resin to manufacture a film form and extracting the diluent from the film, and may be manufactured by a wet method including a common sequential biaxial stretching process known to a person skilled in the art and is not limited as long as a microporous membrane having the physical properties as described above may be manufactured.

As an embodiment, the polypropylene microporous membrane satisfying all of the physical properties as described above may be manufactured by using a polypropylene resin having a specific range of viscosity average molecular weight or performing a heat treatment at a specific temperature after extracting a diluent. Accordingly, the polypropylene microporous membrane may have excellent puncture strength and permeability and also have significantly improved heat resistance at a high temperature. Since the polypropylene microporous membrane satisfying the physical properties as described above simultaneously is included, the present disclosure may provide a battery which may secure excellent battery performance and have excellent thermal safety at a high temperature so that battery fuming or ignition does not occur in a hot-box evaluation at a high temperature of 140°C.

As an embodiment, the polypropylene resin included in the polypropylene microporous membrane may have a viscosity average molecular weight of $1 \times 10^6$ g/mol to $3 \times 10^6$ g/mol, specifically $1.2 \times 10^6$ g/mol to $2.5 \times 10^6$ g/mol, and more specifically $1.3 \times 10^6$ g/mol to $2.2 \times 10^6$ g/mol.

As an embodiment, heat treating at a specific temperature after extracting a diluent may be heat stretching the film obtained after extracting the diluent at a first temperature and heat-setting and heat-relaxing the heat-stretched film at a second temperature higher than the first temperature.

Hereinafter, the method for manufacturing a polypropylene microporous membrane of the present disclosure will be described.

The method for manufacturing a polypropylene microporous membrane according to an embodiment may include: (a) melting and kneading a mixture including a polypropylene resin having a viscosity average molecular weight of $1 \times 10^6$ g/mol to $3 \times 10^6$ g/mol and a diluent through an extruder to prepare a melt; (b) extruding the melt to mold it into a sheet form; (c) sequentially biaxially stretching the sheet in the machine direction and the transverse direction to mold it into a film; (d) extracting the diluent from the stretched film and drying the film; and (e) performing a heat treatment by heat stretching the dried film at a temperature at which 2% to 5% of crystals of the polypropylene resin melt, and heat-setting and heat-relaxing the heat-stretched film at a temperature at which 25% to 60% of the crystals of the polypropylene resin melt.

Hereinafter, each manufacturing step will be described.

First, (a) is a step of melting and kneading a mixture including a polypropylene resin and a diluent through an extruder to prepare a melt, in which the mixture may include the polypropylene resin and the diluent at a weight ratio of 10 to 60:90 to 40 for forming pores, specifically at a weight ratio of 20 to 40:80 to 60, but is not particularly limited as long as the purpose of the present disclosure is achieved. When the weight ratio range described above is satisfied, the melt has sufficient flowability, so that it is easy to perform uniform sheet molding in a subsequent step, sufficient orientation is performed in a stretching process, so that it is easy to secure mechanical strength, and a problem such as fracture in a stretching process may not arise.

The polypropylene resin may have a viscosity average molecular weight of $1 \times 10^6$ g/mol to $3 \times 10^6$ g/mol, preferably $1.2 \times 10^6$ g/mol to $2.5 \times 10^6$ g/mol, and more preferably $1.3 \times 10^6$ g/mol to $2.2 \times 10^6$ g/mol, or may include a polypropylene having the viscosity average molecular weight in the range described above. Since the polypropylene microporous membrane has the viscosity average molecular weight range described above, the physical properties to be desired in the present disclosure may be implemented. A battery to which the microporous membrane satisfying the physical properties described above is applied has low initial resistance to have excellent battery performance, and also may achieve excellent thermal safety in hot-box evaluation.

In an embodiment, the polypropylene resin used for the manufacture may have a melt temperature of 160°C or higher, specifically 160°C to 170°C, but is not necessarily limited thereto. The melt temperature of the polypropylene resin may be determined by DSC.

In an embodiment, as the diluent, any organic compound forming a single phase with the polypropylene resin at extrusion temperature may be used without limitation. For example, the diluent may be one or a combination of two or more selected from the group consisting of aliphatic or cyclic hydrocarbons such as nonane, decane, decalin, paraffin oil, and paraffin wax, phthalic acid esters such as dibutyl phthalate and dioctyl phthalate, C10-C20 fatty acids such as palmitic acid, stearic acid, oleic acid, linoleic acid, and linolenic acid, and C10-C20 fatty alcohols such as cetyl alcohol, stearyl alcohol, and oleyl alcohol. A specific example of the diluent may include a paraffin oil having a kinetic viscosity at 40°C of $2 \times 10^{-5}$ $m^2/s$ to $2 \times 10^{-4}$ $m^2/s$ (20 cSt to 200 cSt), but is not limited thereto and other diluents can be used which may have same or similar kinetic viscosities at a suitable extrusion temperature, such as having kinetic viscosities in a range of $1 \times 10^{-6}$ $m^2/s$ to $1 \times 10^{-3}$ $m^2/s$ (1 cSt to 1000 cSt), or in a range of $1 \times 10^{-5}$ $m^2/s$ to $5 \times 10^{-4}$ $m^2/s$ (10 cSt to 500 cSt) .

In addition, the mixture may further include any one or more of general additives for improving specific functions such as an oxidation stabilizer, a UV stabilizer, and an antistatic agent in a range where the characteristics of the microporous membrane are not greatly deteriorated.

(b) is a step of extruding the melt to mold it into a sheet form and may be performed without limitation by a method known to a person skilled in the art, and as an example, the melt may be molded into a sheet form by casting or calendaring method while the melt is extruded through a T-die and cooled to a temperature of 10°C to 80°C.

Stretch ratios in the machine direction and the transverse direction in step (c) may be independently of each other 4 times or more, 6 times or more and 10 times or less or 15 times or less, and for example, may be 4 times to 15 times or 6 times to 10 times. Since the stretch ratios in the machine direction and the transverse direction satisfy the range described above, the polypropylene microporous membrane having the physical properties to be desired in the present disclosure may be manufactured.

The stretching in step (c) may be performed by a sequential stretching method in a roll or tenter manner, and performed at a temperature in a range from a temperature lower than the melting temperature of polypropylene by 80°C to the melting temperature of polypropylene. When the stretching is performed in the temperature range described above, flowability of the polypropylene resin for effective stretching may be secured. Specifically, since stretching occurs uniformly throughout the sheet and fracture by stretching does not occur, stretching may stably occur, and thus, a high-quality microporous membrane which implements physical properties such as uniform gas permeability and puncture strength throughout the membrane may be manufactured. As an example, the stretching may be performed at 100°C to 170°C or 110°C to 160°C, but is not limited thereto.

(d) is a step of extracting the diluent from the stretched film and drying the film. The diluent inside the film may be extracted using an organic solvent, and then drying the film in which the diluent is replaced with the organic solvent. The organic solvent may be used without particular limitation as long as the diluent may be extracted. Specifically, as the organic solvent, methyl ethyl ketone, methylene chloride, hexane, and other suitable organic solvents may be used in terms of high extraction efficiency and rapid drying.

Step (d) may be performed at a high temperature for increasing solubility of the diluent and the organic solvent, but may be performed at a temperature of 40°C or lower in terms of safety due to boiling of the organic solvent.

(e) is a step of performing a heat treatment by heat stretching the dried film at a temperature at which 2% to 5% of crystals of the polypropylene resin melt using a roll type or tenter type device, and heat-setting and heat-relaxing the heat-stretched film at a temperature at which 25% to 60% of the crystals of the polypropylene resin melt. Since the heat treatment is performed at the temperature described above, the physical properties to be desired in the present disclosure may be implemented. A microporous membrane having the physical properties is appropriate for being applied to a high output/high capacity battery. Specifically, a battery to which the microporous membrane satisfying the physical properties described above is applied has low initial resistance to have excellent battery performance, and also may achieve excellent thermal safety in hot-box evaluation.

In an embodiment, a temperature at which the crystals of the polypropylene resin melt to a certain degree may vary depending on the viscosity average molecular weight and the crystallinity of the polypropylene to be used. Since polypropylene having the viscosity average molecular weight range described above is used as the polypropylene resin for manufacturing the polypropylene microporous membrane in the present disclosure, and when considering that viscosity average molecular weight of polypropylene may be $1 \times 10^6$ g/mol to $3 \times 10^6$ g/mol the heat stretching in (e) may be performed at a temperature of 125°C to 135°C, specifically 127°C to 133°C. In addition, the heat-setting and the heat-relaxing in (e) may be performed at a temperature of 155°C to 165°C, specifically 157°C to 165°C.

The heat stretching in (e) may be, for example, stretching in the machine direction and the transverse direction, may be stretching in the transverse direction in terms of a heat shrinkage rate, and may be stretching to 120% to 160% or 130% to 150% of the transverse width before the heat stretching.

The heat-relaxing in (e) may be mitigating (shrinking) in the machine direction and the transverse direction, may be mitigating in the transverse direction in terms of a heat shrinkage rate, and may be mitigating to 80% to 99% or 90% to 99% of the transverse width before heat-relaxing.

The present disclosure provides a separator including the polypropylene microporous membrane as described above, and the separator may be a separator used in any known energy storage device and though is not particularly limited, as a non-limiting example, may include a separator used in a lithium secondary battery.

Hereinafter, the examples and the experimental examples will be illustrated in detail. However, the examples and the experimental examples described later are only illustrative of some, and the technology described in the present specification is not limited thereto.

[Method of measuring physical properties]

1. Viscosity average molecular weight (g/mol)

The viscosity average molecular weight (Mv) of polypropylene was determined by measuring an intrinsic viscosity ($\eta$) based on ISO 16152:2022 at 165°C using a Crystex QC model available from Polymer char and performing calculation from a Margolies equation represented by the following Equation 1. The intrinsic viscosity was measured using 1,2,4-trichlorobenzene (TCB) as a solvent.

[Equation 1]

$$Mv = 5.37 \times 10^4 \times [\eta]^{1.49}$$

**2. Thickness of microporous membrane (um)**

The thickness of the microporous membrane was measured using a contact type thickness meter having a thickness precision of 0.1 um. The measurement was performed at a measurement pressure of 0.63 N using TESA Mu-Hite Electronic Height Gauge available from TESA.

**3. Puncture strength (N/$\mu$m)**

The puncture strength was measured by attaching a pin tip having a diameter of 1.0 mm and a radius of curvature of 0.5 mm to Universal Test Machine (UTM) 3345 available from INSTRON and pressing a microporous membrane at a speed of 120 mm/min. At this time, a load (N) when the microporous membrane was broken was divided by a thickness ($\mu$m) of the microporous membrane to calculate the puncture strength.

**4. Gas permeability (Darcy)**

The gas permeability was measured using a porometer (CFP-1500-AEL available from PMI). Generally, the gas permeability is expressed in a Gurley number, but since the Gurley number is not corrected for the effect of the thickness, it is difficult to know relative permeability depending on a pore structure. In order to solve the problem, the gas permeability of the present disclosure was measured using a Darcy permeability coefficient calculated from the following Equation 2. Nitrogen was used as gas, and an average value of the Darcy permeability coefficients measured in a range of 100 to 200 psi was calculated.

Darcy permeability coefficient (C) = (8F $\cdot$ T $\cdot$ V) / ($\pi$D$^2$ (P$^2$- 1) )　　　　　　　　　　[equation 2]

F = flow velocity (in cc/cm)
T = sample thickness (in mm, using the value measured in section 2.)
V = viscosity of gas (0.185 cP, or 18.5 pPa-s at 20°C for N$_2$)
D = diameter of sample (in mm)
P = pressure (in psi)

The calculated permeability coefficient C then corresponds to the measured/calculated "permeability value" in "Darcy".

**5. Shrinkage rate in the transverse direction (%)**

A microporous membrane of 15 cm×15 cm in which each of machine and horizontal directions was indicated at a length of 10 cm was allowed to stand in an oven (DKN612 available from YAMATO a company incorporated in Japan) of which the temperature was stabilized to 150°C for 1 hour, and a change in length was measured to calculate the shrinkage rate in the transverse direction by a method of the following Equation 3:

Shrinkage rate in the transverse direction (%) = { (transverse length before heating - transverse length after heating) / transverse length before heating} $\times$ 100　　　　[equation 3]

**6. Average pore size (nm)**

The average pore size was measured from a porometer (CFP-1500-AEL available from PMI) in accordance with ASTM F316-03. The average pore size was measured by a half dry method (see ASTM F316-03), and a Galwick solution (surface tension: 15.9 dyne/cm) provided by PMI was used for measuring a pore size.

**7. Melt fracture temperature**

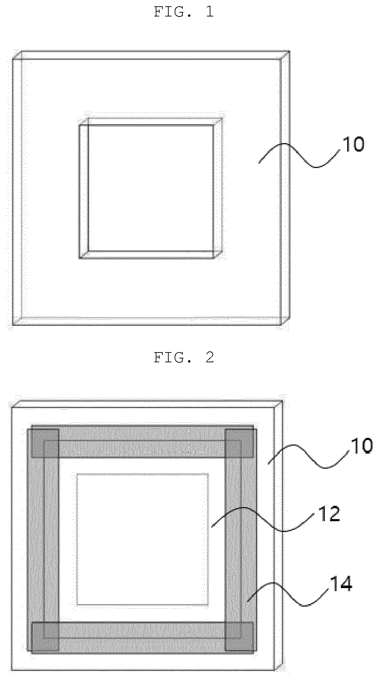

The melt fracture temperature of a microporous membrane 12 was measured by fixing a microporous membrane 12 (5 cm×5 cm) to a frame 10 (outline: 7.5 cm×7.5 cm, inner diameter: 2.5 cm×2.5 cm) as in FIG. 1 with a polyimide tape 14 as in FIG. 2, and allowing it to stand in a convection oven maintained at a set temperature for 10 minutes, and observing whether the microporous membrane was broken. A highest temperature at which the microporous membrane was not broken after 10 minutes was defined as a melt fracture temperature.

## 8. Initial resistance test

The initial resistance test was performed using an assembled battery to which a polypropylene microporous membrane was applied as a separator. Specifically, a positive electrode using NCM 622 (Ni:Co:Mn = 6:2:2) as an active material and a negative electrode using graphite carbon as an active material were wound with a manufactured microporous membrane and added to an aluminum pouch, an electrolyte solution of 1 M lithium hexafluorophosphate (LiPF$_6$) dissolved in a solution including ethylene carbonate, ethyl methyl carbonate, and diethyl carbonate at a volume ratio of 3:5:2 was injected thereinto, and the pouch was sealed, thereby assembling a battery having a capacity of 2 Ah. The assembled battery was subjected to aging and degassing operations and then fully charged to 4.2 V to measure initial resistance (mΩ).

When the initial resistance was 50 mΩ or less, it was confirmed that a capacity was maintained at 20% or more in a 2C-rate discharge test, and thus, the initial resistance value was an evaluation indicator for output characteristics.

## 9. Hot-box evaluation

The hot-box evaluation was performed using an assembled battery to which a polypropylene microporous membrane was applied as a separator. Specifically, a positive electrode using NCM 622 (Ni:Co:Mn = 6:2:2) as an active material and a negative electrode using graphite carbon as an active material were wound with a manufactured microporous membrane and added to an aluminum pouch, an electrolyte solution of 1 M lithium hexafluorophosphate (LiPF$_6$) dissolved in a solution including ethylene carbonate, ethyl methyl carbonate, and diethyl carbonate at a volume ratio of 3:5:2 was injected thereinto, and the pouch was sealed, thereby assembling a battery having a capacity of 2 Ah. The assembled battery was subjected to aging and degassing operations, fully charged to 4.2 V, put into an oven which was heated at 5°C/min to reach 140°C, and then allowed to stand for 30 minutes, thereby measuring a battery change.

When fuming or ignition occurred in the battery after 30 minutes at 140°C, it was determined as Fail, and when no change in voltage/current of the battery and fuming and ignition did not occur, it was determined as Pass.

## 10. Analysis of thermal properties of film

A phenomenon in which crystals of a polypropylene resin melt depending on a temperature was analyzed using Discovery DSC250 which is a differential scanning calorimeter (DSC) available from TA Instruments, and the analysis was performed under the conditions of a sample weight of 5 mg and a scanning speed of 10°C/min.

A temperature ($T_n$) at which n% of the crystals of the polypropylene resin melt was measured by calculating a temperature at a point showing a heat capacity of n% with respect to the total heat capacity (heat of fusion). In the present disclosure, $T_2$, $T_5$, $T_{25}$, and $T_{60}$ which are temperatures at which 2%, 5%, 25%, and 60% of crystals of a film introduced to a heat fixation device melt were measured and are listed in Table 1.

## 11. Porosity (%)

The porosity was calculated by the following equation. Specifically, a sample having a width of A cm (e.g. 30 cm), a length of B cm (e.g. 20 cm), and a thickness of T cm (e.g. 0.0003 to 0.002 cm) was prepared, its mass was measured, and the porosity was calculated from a ratio between a mass of a resin having the same volume and a mass of a microporous membrane.

$$\text{Porosity (\%)} = 100 \times \{1 - M/(A \times B \times T \times \rho)\}$$

wherein M is a mass (g) of a microporous membrane, and $\rho$ is a density (g/cm$^3$) of a polypropylene resin forming a microporous membrane.

## <Example 1>

A mixture including a polypropylene resin having a viscosity average molecular weight of $1.5 \times 10^6$ g/mol and a melting temperature of 165°C and a paraffin oil having a kinematic viscosity of 80 cSt at 40°C at a weight ratio of 30:70 was melted and kneaded using a twin-screw extruder to prepare a melt. The melting temperature was measured using the differential scanning calorimeter (DSC) Discovery DSC250 available from TA Instruments, and the measurement was performed under the conditions of a sample weight of 5 mg and a scanning speed of 10°C/min.

The melt was continuously extruded through a T-die and a casting roll set to 30°C was used to manufacture a sheet having a width of 300 mm and an average thickness of 1100 um. The sheet was stretched in the machine direction in a roll manner so that the sheet became 6 times larger at a stretching temperature of 115°C, and continuously stretched in the transverse direction to 6 times larger at a stretching temperature of 140°C by guidance with a tenter.

The paraffin oil was extracted from the film which completed stretching in the machine direction and the transverse direction at 25°C using methylene chloride, and the film from which the paraffin oil was extracted was dried at 60°C.

The dried film was heat stretched in the transverse direction to 145% at 130°C at which 3% of crystals of the polypropylene resin melt using a tenter type heat fixation device. Next, heat fixation was performed at 160°C at which 35% of the crystals of the polypropylene resin melt for 10 seconds and heat-relaxation (shrinkage) to 93% of the width before the heat-relaxation process was performed in the transverse direction to manufacture a microporous membrane having a thickness of 12.8 $\mu$m.

The physical properties of the finally manufactured microporous membrane and the performance of a battery to which the microporous membrane was applied are listed in Table 2.

### <Examples 2 to 3 and Comparative Examples 1 to 6>

Polypropylene microporous membranes were manufactured in the same manner as in Example 1, except that the viscosity average molecular weight (PP Mv), the stretch ratio in the machine/transverse direction, and the heat treatment temperature of the used polypropylene resin were changed to the conditions described in Table 1, and the physical properties of the finally manufactured microporous membranes and the performance of batteries to which the microporous membranes were applied are listed in Table 2.

[Table 1]

| | PP Mv | Stretch ratio in the machine direction | Stretch ratio in the transverse direction | Heat treatment temperature (heat stretching - heat fixation - heat relaxation) | $T_2$ | $T_5$ | $T_{25}$ | $T_{60}$ |
|---|---|---|---|---|---|---|---|---|
| Unit | g/mol | Times | Times | °C | °C | °C | °C | °C |
| Example 1 | $1.5\times10^6$ | 6.0 | 6.0 | 130-160-160 | 127 | 135 | 155 | 165 |
| Example 2 | $2.0\times10^6$ | 6.0 | 6.0 | 130-160-160 | 126 | 134 | 154 | 163 |
| Example 3 | $1.5\times10^6$ | 6.0 | 6.0 | 130-165-165 | 127 | 135 | 155 | 165 |
| Comparative Example 1 | $0.7\times10^6$ | 8.0 | 8.0 | 130-160-160 | 127 | 135 | 155 | 164 |
| Comparative Example 2 | $3.2\times10^6$ | 8.0 | 8.0 | 130-160-160 | 124 | 131 | 151 | 162 |
| Comparative Example 3 | $1.5\times10^6$ | 6.0 | 8.0 | 160-160-160 | 127 | 135 | 155 | 165 |
| Comparative Example 4 | $1.5\times10^6$ | 6.0 | 8.0 | 150-160-160 | 127 | 135 | 155 | 165 |
| Comparative Example 5 | $1.5\times10^6$ | 5.0 | 5.0 | 130-150-150 | 127 | 135 | 155 | 165 |
| Comparative Example 6 | $1.5\times10^6$ | 6.0 | 8.0 | 130-170-170 | 127 | 135 | 155 | 165 |

[Table 2]

| | Thickness | Puncture strength | Gas permeability | Porosity | Average pore size | Shrinkage rate in the transverse direction | Melt fracture temperature | Initial resistance | Hot-box evaluation |
|---|---|---|---|---|---|---|---|---|---|
| Unit | μm | N/μm | $10^{-5} \cdot$ Darcy | % | nm | % | °C | mΩ | – |
| Example 1 | 12.8 | 0.36 | 1.6 | 38.3 | 31.7 | 12.4 | 175 | 41 | Pass |
| Example 2 | 13.3 | 0.38 | 1.5 | 35.5 | 29.3 | 13.1 | 178 | 42 | Pass |
| Example 3 | 12.7 | 0.37 | 1.5 | 36.0 | 29.7 | 9.8 | 176 | 42 | Pass |
| Comparative Example 1 | Film breakage | | | | | | | | |
| Comparative Example 2 | Physical property deviation being very severe | | | | | | | | |
| Comparative Example 3 | 10.4 | 0.46 | 0.3 | 21.5 | 21.9 | 11.1 | 180 | 58 | Pass |
| Comparative Example 4 | 11.2 | 0.45 | 0.74 | 24.5 | 23.1 | 12.8 | 180 | 55 | Pass |
| Comparative Example 5 | 7.8 | 0.28 | 1.8 | 39.5 | 33.5 | 25.1 | 170 | 40 | Fail |
| Comparative Example 6 | 12.9 | 12.9 | 0.18 | 15.3 | 18.2 | 9.6 | 180 | 65 | Pass |

Referring to Tables 1 and 2, since the microporous membranes of the examples satisfied all of the physical properties to be desired in the present disclosure, the batteries to which the microporous membranes were applied had an initial resistance of 50 mΩ or less and passed the hot-box evaluation to excellently achieve battery performance and safety under a high temperature environment.

The microporous membrane of Comparative Example 1 was manufactured using a polypropylene resin having a viscosity average molecular weight of less than $1.0 \times 10^6$ g/mol, and as a result, entanglements between chains less occurred to cause fracture of film during heat stretching in a heat treatment step.

The microporous membrane of Comparative Example 2 was manufactured using a polypropylene resin having a viscosity average molecular weight of more than $3.0 \times 10^6$ g/mol, and as a result, the resin and the diluent were non-uniformly kneaded to manufacture a sheet having a non-uniform thickness and product quality was nonuniform.

The microporous membranes of Comparative Examples 3 and 4 were heat stretched in the heat treatment step at a temperature higher than the temperature ($T_5$) at which 5% of crystals of the film introduced to the heat fixation device melt, and as a result, the gas permeability, the porosity, and the average pore size were less than $1.0 \times 10^{-5}$ Darcy, less than 25%, and less than 24 nm, respectively, and thus, the batteries to which the microporous membranes were applied had thermal safety equivalent to the present disclosure, but the initial resistance of 55 mΩ or more, so that battery performance was inferior.

The microporous membrane of Comparative Example 5 was heat fixed and heat mitigated in the heat treatment step at a temperature lower than the temperature ($T_{25}$) at which 25% of crystals of the film introduced to the heat fixation device melt, and as a result, physical properties such as the gas permeability were satisfied, but the shrinkage rate in the transverse direction was shown to be 25.1%, and thus, the battery to which the microporous membrane is applied has greatly deteriorated safety in a high temperature environment.

The microporous membrane of Comparative Example 6 was heat fixed and heat mitigated in the heat treatment step at a temperature higher than the temperature ($T_{60}$) at which 60% of crystals of the film introduced to the heat fixation device melt, and as a result, the gas permeability, the porosity, and the average pore size were less than $0.2 \times 10^{-5}$ Darcy, less than 16%, and less than 19 nm, respectively, and thus, the battery to which the microporous membrane was applied had thermal safety equivalent to the present disclosure, but the initial resistance of 65 mΩ, so that battery performance was inferior.

The polypropylene microporous membrane according to the present disclosure may have excellent puncture strength and permeability and also secure significantly improved heat resistance at a high temperature.

In addition, the polypropylene microporous membrane according to the present disclosure may have a puncture strength of 0.20 N/um or more and a gas permeability of $1.0 \times 10^{-5}$ Darcy or more.

In addition, the polypropylene microporous membrane according to the present disclosure may have a shrinkage rate in the transverse direction of 20% or less as measured after being allowed to stand at 150°C for 1 hour.

In addition, the present disclosure may provide a battery having excellent safety so that fuming or ignition does not occur in a high-temperature environment while securing excellent battery performance, by including the polypropylene microporous membrane according to an embodiment. Specifically, the present disclosure may provide a battery which may have excellent safety so that battery fuming or ignition does not occur in a hot-box evaluation at a high temperature of 140°C.

Hereinabove, although the present disclosure has been described by the specific matters and limited exemplary embodiments in the present specification, they have been provided only for assisting the entire understanding of the present disclosure, and the present disclosure is not limited to the exemplary embodiments, and various modifications and changes may be made by those skilled in the art to which the present disclosure pertains from the description.

**Claims**

1. A polypropylene microporous membrane comprising a polypropylene having a viscosity average molecular weight of $1\times10^6$ g/mol to $3\times10^6$ g/mol, wherein the microporous membrane has a thickness of 3 um to 30 $\mu$m, a puncture strength of 0.20 N/um or more, a gas permeability of $1.0\times10^{-5}$ Darcy or more, a porosity of 25% to 60%, an average pore size of 25 nm to 50 nm, and a shrinkage rate in the transverse direction of 20% or less as measured after being allowed to stand at 150°C for 1 hour.

2. The polypropylene microporous membrane of claim 1, wherein the polypropylene microporous membrane has a melt fracture temperature of 165°C or higher.

3. The polypropylene microporous membrane of claim 1 or 2, wherein the shrinkage rate in the transverse direction is 15% or less.

4. The polypropylene microporous membrane of any one of the preceding claims, wherein the polypropylene microporous membrane is manufactured by a wet method including a sequential biaxial stretching process.

5. A method for manufacturing a polypropylene microporous membrane, the method comprising:

   (a) melting and kneading a mixture including a polypropylene resin having a viscosity average molecular weight of $1\times10^6$ g/mol to $3\times10^6$ g/mol and a diluent through an extruder to prepare a melt;
   (b) extruding the melt to mold it into a sheet form;
   (c) sequentially biaxially stretching the sheet in the machine direction and the transverse direction to prepare it into a film;
   (d) extracting the diluent from the stretched film and drying the film; and
   (e) performing a heat treatment by heat stretching the dried film at a temperature at which 2% to 5% of crystals of the polypropylene resin melt, and heat-setting and heat-relaxing the heat-stretched film at a temperature at which 25% to 60% of the crystals of the polypropylene resin melt.

6. The method for manufacturing a polypropylene microporous membrane of claim 5, wherein the heat stretching in (e) is performed at a temperature of 125°C to 135°C.

7. The method for manufacturing a polypropylene microporous membrane of claim 5 or 6, wherein the heat-setting and the heat-relaxing in (e) are performed at a temperature of 155°C to 165°C.

8. A separator comprising the polypropylene microporous membrane of any one of claims 1 to 4.

9. An electrochemical device comprising the separator of claim 8.

10. The electrochemical device of claim 9, which is a secondary battery comprising said separator between a positive electrode and a negative electrode.

11. A microporous membrane for a separator of a secondary battery, the microporous membrane being made in the form of a thin film having a thickness of 3 um to 30 um from a polypropylene resin having a viscosity average molecular weight of $1\times10^6$ g/mol to $3\times10^6$ g/mol, the film having a porosity of 25% to 60%, and an average pore size of 25 nm to 50 nm,
   wherein the microporous membrane exhibits a puncture strength of 0.20 N/um or more, a gas permeability of $1.0\times10^{-5}$

Darcy or more, a porosity of 25% to 60% and a shrinkage rate in the transverse direction of 20% or less as measured after being allowed to stand at 150°C for 1 hour.

12. The polypropylene microporous membrane of claim 11, wherein the microporous membrane has a melt fracture temperature of 165°C or higher.

13. The polypropylene microporous membrane obtained by the method of any one of claims 5 to 7.

FIG. 1

10

FIG. 2

10

12

14

**Europäisches Patentamt**
**European Patent Office**
**Office européen des brevets**

# EUROPEAN SEARCH REPORT

Application Number

EP 24 17 5795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2013/302696 A1 (ISHIHARA TAKESHI [JP] ET AL) 14 November 2013 (2013-11-14)<br>* paragraphs [0092], [0110], [0111]; claims 1, 5-9; example 4; table 1 *<br>----- | 1,2,4,<br>8-13<br>3,5-7 | INV.<br>C08J5/18<br>B01D67/00<br>C08J5/22<br>H01M50/417 |
| X<br>A | EP 2 111 910 A1 (TONEN SEKIYUKAGAKU KK [JP]) 28 October 2009 (2009-10-28)<br>* paragraphs [0100], [0101], [0103] - [0125]; claims 1-10; examples 1-7,9; tables 1-3 *<br>----- | 1-4,8-13<br><br>5-7 | H01M50/489<br>H01M50/491 |
| X<br>A | EP 3 239 222 A1 (TORAY INDUSTRIES [JP]) 1 November 2017 (2017-11-01)<br>* paragraphs [0044], [0045], [0091], [0092], [0111], [0112]; claims 1-15; example 4; table 1 *<br>----- | 1-4,8-13<br><br>5-7 | |

TECHNICAL FIELDS
SEARCHED    (IPC)

C08J
H01M
B01D

The present search report has been drawn up for all claims

| Place of search | Date of completion of the search | Examiner |
|---|---|---|
| Munich | 7 October 2024 | Fischer, Viktor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 5795

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2024

| Patent document cited in search report | Publication date | Patent family member(s) | Publication date |
|---|---|---|---|
| US 2013302696 A1 | 14-11-2013 | CN 103328552 A | 25-09-2013 |
|  |  | JP WO2012102129 A1 | 30-06-2014 |
|  |  | KR 20140043706 A | 10-04-2014 |
|  |  | US 2013302696 A1 | 14-11-2013 |
|  |  | WO 2012102129 A1 | 02-08-2012 |
| EP 2111910 A1 | 28-10-2009 | NONE | |
| EP 3239222 A1 | 01-11-2017 | CN 107223147 A | 29-09-2017 |
|  |  | CN 107250234 A | 13-10-2017 |
|  |  | EP 3239222 A1 | 01-11-2017 |
|  |  | JP 6729391 B2 | 22-07-2020 |
|  |  | JP 6729392 B2 | 22-07-2020 |
|  |  | JP WO2016104789 A1 | 05-10-2017 |
|  |  | JP WO2016104792 A1 | 05-10-2017 |
|  |  | KR 20170101288 A | 05-09-2017 |
|  |  | KR 20170101290 A | 05-09-2017 |
|  |  | US 2017341035 A1 | 30-11-2017 |
|  |  | WO 2016104789 A1 | 30-06-2016 |
|  |  | WO 2016104792 A1 | 30-06-2016 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110101202